# EUROPÄISCHE PATENTSCHRIFT

(11) **EP 2 132 524 B1**
(45) Veröffentlichungstag und Bekanntmachung des Hinweises auf die Patenterteilung: **26.10.2016**
(21) Anmeldenummer: 08714289.9
(22) Anmeldetag: 14.03.2008
(51) Int. Cl.: G01B 11/24

(54) **VERFAHREN UND APPARAT ZUR OPTISCHEN MESSUNG DER TOPOGRAFIE EINER PROBE**
METHOD AND APPARATUS FOR THE OPTICAL MEASUREMENT OF THE TOPOGRAPHY OF A SAMPLE
PROCÉDÉ ET APPAREIL DE MESURE DE LA TOPOGRAPHIE D'UN ÉCHANTILLON

(30) Priorität: 14.03.2007 AT 4072007
(43) Veröffentlichungstag der Anmeldung: 16.12.2009
(73) Patentinhaber: Alicona Imaging GmbH, 8074 Raaba bei Graz (AT)
(72) Erfinder: PRANTL, Manfred, A-8044 Graz (AT); SCHERER, Stefan, A-8010 Graz (AT)
(74) Vertreter: Margotti, Herwig Franz
(86) Internationale Anmeldenummer: PCT/AT2008/000092
(87) Internationale Veröffentlichungsnummer: WO 2008/109908

(56) Entgegenhaltungen:
- WO-A-88/02846
- DE-A1-102004 047 928
- US-A- 5 880 844
- US-B1- 6 344 930

## Beschreibung

Die Erfindung betrifft ein Verfahren zur optischen Messung der Topografie einer Probe, umfassend das Beleuchten einer zu messenden Probe, das Auffangen von Darstellungen der Probe in Form des von der Probe abgestrahlten Lichts mit einer Optik mit limitierter Schärfentiefe, das wiederholte Aufnehmen von Bildern der von der Optik aufgefangenen Darstellungen der Probe in einem Bildsensor, wobei zwischen dem Aufnehmen der Bilder der Fokuspunkt der Optik in Relation zur Probe kontinuierlich verlagert wird, und das Auswerten der vom Bildsensor aufgenommenen Bilder durch Kombinieren der Bilder zu einem 3D Modell der Probe.

Die Erfindung betrifft weiters einen Apparat zur optischen Messung der Topografie einer Probe, umfassend eine Beleuchtungseinrichtung zum Beleuchten einer zu messenden Probe, eine Optik mit limitierter Schärfentiefe zum Auffangen von Darstellungen der Probe in Form des von der Probe abgestrahlten Lichts, einen an die Optik angeschlossenen Bildsensor zum Aufnehmen von Bildern der von der Optik aufgefangenen Darstellungen der Probe, eine Fokuspunkt-Verlagerungseinrichtung zur kontinuierlichen Verlagerung des Fokuspunkts der Optik in Relation zur Probe zwischen einzelnen Bildaufnahmen und eine Auswerteeinheit zum Auswerten der vom Bildsensor aufgenommenen Bilder durch Kombinieren der Bilder zu einem 3D Modell der Probe, wobei Brennweitenverstellmittel vorgesehen sind.

Fokus Variation ist eine Technologie zur optischen Messung der Topografie einer Probe. Dabei wird das Licht einer Beleuchtungseinrichtung auf die zu messende Probe gestrahlt und das von der Probe abgestrahlte Licht mit einer Optik aufgefangen. Dazu wird eine Optik mit limitierter Schärfentiefe verwendet. Wenn der Fokuspunkt der Optik, zum Beispiel durch eine Verfahreinheit, variiert wird, werden unterschiedliche Bereiche der Probe scharf in einem Bildsensor abgebildet. Die Bilder des Bildsensors werden in einer Auswerteeinheit zu einem 3D Modell kombiniert. Diese Technologie wird in der ISO Norm 25178-6 zur topographischen Messung von Oberflächen beschrieben.

Das Dokument US 6 344 930 beschreibt eine Bilderzeugungsvorrichtung, die trotz geringer Schärfentiefe der verwendeten Optik in der Lage ist ein 3-dimensionales Objekt zur Gänze scharf darzustellen. Um dies zu erreichen umfasst die Bilderzeugungsvorrichtung eine Flüssiglinse mit veränderbarer Brennweite, ein CCD-Element zur Aufnahme von Bildern, einen Mikrocomputer und eine Flüssigkristallanzeige. Der Mikrocomputer beinhaltet einen Bildspeicher, eine Bildverarbeitungsschaltung und eine Steuereinheit. Die Linse mit variabler Brennweite ermöglicht es, von einem Objekt eine Vielzahl an Fotos zu machen, wobei zwischen zwei Aufnahmen immer die Brennweite leicht verändert wird. Im Anschluss an die Aufnahmen werden Bildpunkte der Aufnahmen, die jeweils einem scharfgestellten Bereich entsprechen, zu einer Gesamtaufnahme zusammengesetzt, in der das Objekt zur Gänze scharf dargestellt ist.

Das Dokument DE 10 2004 047 928 offenbart eine flexible, flüssigkeitsgefüllte Linse einer Abbildungsvorrichtung, wie eines Mikroskops. Der Fokuspunkt oszilliert zwischen zwei Grenzbrennweiten, die ein Objekt umgeben. Da dieses Oszillieren so schnell (z.B. >= 60 Hz) erfolgt, dass das menschliche Auge die Fokusveränderungen nicht in Einzelbilder auflösen kann, wird das Auge ein scharfes Gesamtbild erfassen, da in den jeweils scharf gestellten Bereichen ein hoher Kontrast auftritt, den das Auge speichert, wogegen die kontrastlosen, unscharfen Bereiche quasi ausgeblendet und im Laufe der Fokuspunkt-Schwingung jeweils durch scharfe Bereiche "überschrieben" werden.

Nachteilig an den bisher bekannten Verfahren und Apparaten zur optischen Messung der Topografie einer Probe sind jedoch die unbefriedigende Arbeitsgeschwindigkeit, die beschränkte Lebensdauer der Apparate sowie die bisher erzielten Genauigkeiten der Messungen.

Der vorliegenden Erfindung liegt die Aufgabe zugrunde, ein Verfahren und einen Apparat der eingangs bezeichnete Gattung zur optischen Messung der Topografie einer Probe dahingehend weiterzubilden, dass die Nachteile des Standes der Technik überwunden oder zumindest gemildert werden.

Diese Aufgabe wird durch Bereitstellen eines Verfahrens und eines Apparats zur optischen Messung der Topografie einer Probe mit den kennzeichnenden Merkmalen der Ansprüche 1 bzw. 7 gelöst. Vorteilhafte Ausgestaltungen der Erfindung ergeben sich aus den Unteransprüchen.

Durch die erfindungsgemäße Idee, den Fokuspunkt der Optik in Relation zur Probe durch Verändern der Brennweite der Optik kontinuierlich zu verlagern, wobei der Bildsensor Bilder während des Verlagerungsvorgangs aufnimmt, ergibt sich eine schnelle Fokus-Verstellbarkeit und eine kompakte Bauweise der Optik und damit der gesamten Apparatur. Eine Fokuspunkt-Verlagerungseinheit, die die Verlagerung des Fokuspunkts durchführt, muss somit nicht jedes Mal gestoppt werden, wenn ein Bild der Probe aufgenommen werden soll, um danach wieder in Betrieb gesetzt zu werden. Dadurch wird das Verzögern und Beschleunigen der Fokuspunkt-Verlagerungseinheit eliminiert. Dies beschleunigt den Aufnahmeprozess und erhöht die Lebensdauer der Fokuspunkt-Verlagerungseinheit. Der Bildsensor nimmt während des Verlagerungsvorgangs an definierten Positionen des Fokuspunkts in Relation zur Probe Bilder auf. Dazu ist eine Messsteuerung vorgesehen, die die momentane Position des Fokuspunkts in Relation zur Probe erfasst und an definierten Positionen ein Triggersignal an den Bildsensor sendet, das das Aufnehmen eines Bildes auslöst. Es wird somit gewährleistet, dass die Daten des Bildsensors an einer definierten Position aufgenommen werden. Damit wird die Genauigkeit der Auswertung erhöht.

In einer bevorzugten Ausgestaltung der Erfindung wird die Brennweitenverstellung mittels zumindest einer Flüssiglinse mit steuerbarer Brennweite erzielt. Die Verwendung von Flüssiglinsen zur Brennweitensteuerung ergibt den Vorteil hoher Lebensdauer der Optik und der gesamten Apparatur aufgrund der Reduzierung bewegter mechanischer Teile, sowie einer schnelleren Fokus-Verstellbarkeit und einer kompakteren Bauweise der Optik und damit der gesamten Apparatur.

In einer weiteren Ausführungsform der Erfindung erfolgt das Beleuchten der Probe nicht ständig, sondern intermittierend während des Verlagerungsvorgangs des Fokuspunkts in Relation zur Probe, wobei vorzugsweise die Probe im Wesentlichen nur dann beleuchtet wird, wenn der Bildsensor ein Bild aufnimmt. Die Beleuchtung (koaxial, Hellfeld, Dunkelfeld oder Durchlicht) wird eingeschaltet, kurz bevor der Bildsensor getriggert wird, ein Bild aufzunehmen und nach erfolgter Bildaufnahme ausgeschaltet, bis oder kurz bevor die nächste Bildaufnahmeposition erreicht wird. Der Vorteil dieser Ausführungsform der Erfindung ist, dass die Beleuchtungseinrichtung einer geringeren Hitzeentwicklung ausgesetzt ist. Dies führt zu einer konstanteren Temperatur in der Apparatur, was wiederum genauere Messungen zulässt.

Vorzugsweise wird die Probe mittels LED-Leuchtmitteln beleuchtet. LED-Leuchtmittel erlauben beim kurzzeitigen Beleuchten eine Überschreitung der nominalen Intensität, ohne dass ihre Lebensdauer reduziert wird.

Die Erfindung sieht weiters vor, die Beleuchtungs-Intensität und/oder die Beleuchtungs-Position in Bezug auf die Probe zu variieren. Bei Proben mit stark unterschiedlichen Reflexionseigenschaften müssen Bilder mit unterschiedlichen Empfindlichkeits-Einstellungen des Bildsensors oder unterschiedlicher Beleuchtungs-Intensität verwendet und die Messungen bei der Auswertung fusioniert werden. Dadurch kann eine höhere radiometrische Dynamik der Probenoberfläche abgebildet werden. Da unterschiedliche Oberflächenneigungen das Licht unterschiedlich reflektieren, kann durch Variation der Beleuchtungs-Position auf die Topografie der Probe rückgeschlossen werden. Der Vorteil dabei ist, dass wenige Bilder zu Messung der Oberfläche ausreichen.

Zusammenfassend kann gesagt werden, dass die Vorteile der Erweiterung der Fokusvariation gemäß der vorliegenden Erfindung eine höhere Genauigkeit, ein schnelleres Messen und eine kompaktere Messapparatur ermöglichen.

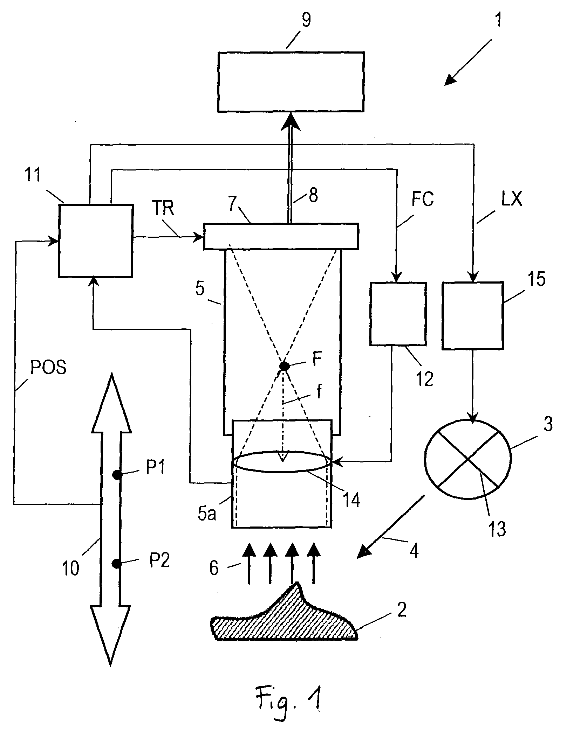

Die Erfindung wird nun anhand eines nicht einschränkenden Ausführungsbeispiels unter Bezugnahme auf die einzige Zeichnungsfigur näher erläutert, die eine schematische Blockschaltbilddarstellung eines erfindungsgemäßen Apparats zur optischen Messung der Topografie einer Probe umfasst.

Der Apparat 1 zur optischen Messung der Topografie einer Probe 2 umfasst eine Beleuchtungseinrichtung 3 zum Beleuchten (Pfeil 4) der zu messenden Probe 2, wobei die Beleuchtung z.B. durch Koaxiallicht, Hellfeld, Dunkelfeld oder Durchlicht erfolgen kann. Weiters ist eine Optik 5 mit limitierter Schärfentiefe zum Auffangen von Darstellungen der Probe 2 in Form des von der Probe abgestrahlten Lichts 6 vorgesehen. Die Optik 5 weist einen Brennpunkt F auf. Ein im Lichtweg der Optik 5 angeordneter Bildsensor 7 dient zum Aufnehmen von digitalen Bildern der von der Optik 5 aufgefangenen Darstellungen der Probe 2. Die vom Bildsensor 7 aufgenommenen Bilder (Bilddaten) werden über einen Datenbus 8 an eine Auswerteeinheit 9 übertragen, wo sie durch Kombinieren der Bilder zu einem 3D Modell der Probe 2 ausgewertet werden.

Gemäß der Erfindung ist eine in der Zeichnung symbolisch als Doppelpfeil dargestellte Fokuspunkt-Verlagerungseinrichtung 10 vorgesehen, die es ermöglicht den Fokuspunkt F der Optik 5 in Relation zur Probe 2 kontinuierlich zu verlagern, wobei durch diese Fokusvariation und die geringe Schärfentiefe der Optik 2 unterschiedliche Bereiche der Probenoberfläche scharf in dem Bildsensor 7 abgebildet werden.

Der Bildsensor 7 ist dazu ausgebildet, Bilder während des kontinuierlichen Fokuspunkt-Verlagerungsvorgangs aufzunehmen. Um dies zu erreichen, ist eine Messsteuerung 11 vorgesehen, die die momentane Position (in der Zeichnung dargestellt als Positionssignal POS) des Fokuspunkts F in Relation zur Probe 2 erfasst und an definierten Positionen P1, P2 an den Bildsensor 7 ein Triggersignal TR sendet, das im Bildsensor 7 das Aufnehmen eines Bildes auslöst. Durch dieses kontinuierliche Variieren des Fokuspunkts F in Relation zur Probe 2 muss - anders als beim Stand der Technik - nicht bei jeder Bildaufnahmeposition die Fokuspunkt-Verlagerungseinrichtung 10 angehalten werden, um das Bild aufzunehmen, sondern die Bilder werden vielmehr während kontinuierlicher Bewegung aufgenommen. Dadurch wird das Verzögern und Beschleunigen der Fokuspunkt-Verlagerungseinrichtung 10 vermieden. Dies beschleunigt den Bildaufnahmevorgang und erhöht die Lebensdauer der Fokuspunkt-Verlagerungseinrichtung 10.

Gemäß der Erfindung umfasst die Fokuspunkt-Verlagerungseinrichtung 10 Brennweitenverstellmittel 12, die auf ein Linsensystem der Optik 5 wirken. Die Brennweitenverstellmittel 12 werden über ein Brennweitensteuersignal FC von der Messsteuerung 11 angesteuert. Bevorzugt ist dabei, dass die Optik 5 zumindest eine Flüssiglinse 14 mit steuerbarer Brennweite f aufweist, die von den Brennweitenverstellmitteln 12 angesteuert wird. Die Verwendung von Flüssiglinsen 14 zur Brennweitensteuerung hat den Vorteil hoher Lebensdauer der Optik und der gesamten Apparatur aufgrund der Reduzierung bewegter mechanischer Teile, sowie einer schnelleren Fokus-Verstellbarkeit und einer kompakteren Bauweise der Optik 5 und damit des gesamten Apparats 1.

Ergänzend dazu (z.B. zur Grobeinstellung) kann die Verlagerung des Fokuspunkts F in Relation zur Probe 2 durch die Veränderung des relativen Abstands zwischen Optik 5 (bzw. deren Brennpunkt F) und der Probe 2 vorgenommen werden. Dazu ist in einer Variante vorgesehen, dass die Fokuspunkt-Verlagerungseinrichtung 10 eine (nicht explizit dargestellte) motorische Verfahreinheit für einen beweglichen, den Fokuspunkt F beeinflussenden Teil 5a der Optik 5 aufweist, die von den Brennweitenverstellmitteln 12 angesteuert wird. In einer anderen Variante umfasst die Fokuspunkt-Verlagerungseinrichtung 10 einen in der Zeichnung nicht dargestellten motorisch bewegbaren Probenhalter, wie z.B. einen verfahrbaren Tisch.

Die dargestellte Ausführungsform des erfindungsgemäßen Apparats 1 zur optischen Messung der Topografie einer Probe 2 umfasst weiters eine von der Messsteuerung 11 mittels Beleuchtungssteuerungssignalen LX angesteuerte Beleuchtungssteuerung 15, die mehrere Betriebsmodi aufweisen kann.

Erstens kann die Beleuchtungssteuerung 15 die Beleuchtungseinrichtung 3 während des Verlagerungsvorgangs des Fokuspunkts in Relation zur Probe intermittierend ein- und ausschalten oder zumindest den Lichtstrahl 4 abdecken bzw. abschwächen, wobei vorzugsweise die Beleuchtungssteuerung 15 in Korrelation zum Triggersignal TR der Messsteuerung 11 Leuchtmittel 13 einschaltet und nach der Bildaufnahme wieder abschaltet. Dadurch ist die Beleuchtungseinrichtung 3 einer geringeren Hitzeentwicklung ausgesetzt, die zu einer konstanteren Temperatur im Apparat 1 und folglich zu genaueren Messungen führt. Die Leuchtmittel 13 sind vorzugsweise LEDs, die kurzzeitig über ihrer nominalen Intensität betrieben werden können, ohne dabei Schaden zu nehmen.

In einem zweiten Betriebsmodus kann die Beleuchtungssteuerung 15 die Beleuchtungs-Intensität der Beleuchtungseinrichtung 3 variieren, was für Proben mit stark unterschiedlichen Reflexionseigenschaften eine höhere radiometrische Dynamik der Probenoberfläche ermöglicht, wenn unter unterschiedlichen Beleuchtungs-Intensitäten aufgenommene Bilder in der Auswerteeinheit 9 fusioniert werden.

Drittens kann die Beleuchtungssteuerung 15 die Beleuchtungs-Position der Beleuchtungseinrichtung 3 in Bezug auf die Probe 2 variieren. Da unterschiedliche Oberflächenneigungen das Licht unterschiedlich reflektieren kann durch Variation der Beleuchtungs-Position auf die Topografie der Probe 2 rückgeschlossen werden. Der Vorteil dabei ist, dass wenige Bilder zu Messung der Oberfläche ausreichen.

Die beschriebenen erfindungsgemäßen Maßnahmen zur Erweiterung der Fokusvariation können je nach Anwendung zu einem Messsystem kombiniert werden. Es kann also für eine gewisse Applikation eine optimale Lösung gefunden werden. In jedem Fall werden durch die erfindungsgemäße Erweiterung der Fokusvariation höhere Genauigkeit, schnellere Messungen und ein kompakterer Messapparat erzielt.

## Patentansprüche

1. Verfahren zur optischen Messung der Topografie einer Probe, umfassend das Beleuchten einer zu messenden Probe (2), das Auffangen von Darstellungen der Probe in Form des von der Probe abgestrahlten Lichts (6) mit einer Optik (5) mit limitierter Schärfentiefe, das wiederholte Aufnehmen von Bildern der von der Optik aufgefangenen Darstellungen der Probe in einem Bildsensor (7), wobei zwischen dem Aufnehmen der Bilder der Fokuspunkt (F) der Optik (5) in Relation zur Probe (2) durch Verändern der Brennweite (f) der Optik (5) kontinuierlich verlagert wird, und das Auswerten der vom Bildsensor aufgenommenen Bilder durch Kombinieren der Bilder zu einem 3D Modell der Probe, wobei der Bildsensor (7) während des Verlagerungsvorgangs an definierten Positionen (P1, P2) des Fokuspunkts in Relation zur Probe Bilder aufnimmt , **dadurch gekennzeichnet, dass** die Beleuchtungs-Intensität variiert wird.

2. Verfahren nach Anspruch 1, **dadurch gekennzeichnet, dass** die Optik (5) zumindest eine Flüssiglinse (14) mit steuerbarer Brennweite (f) aufweist.

3. Verfahren nach Anspruch 1 oder 2, **dadurch gekennzeichnet, dass** die Probe (2) während des Verlagerungsvorgangs des Fokuspunkts (F) in Relation zur Probe intermittierend beleuchtet wird, wobei vorzugsweise die Probe (2) im Wesentlichen nur dann beleuchtet wird, während der Bildsensor ein Bild aufnimmt.

4. Verfahren nach Anspruch 3, **dadurch gekennzeichnet, dass** die Probe (2) mittels LED-Leuchtmitteln (13) beleuchtet wird.

5. Verfahren nach einem der vorhergehenden Ansprüche, **dadurch gekennzeichnet, dass** die Beleuchtungs-Position in Bezug auf die Probe (2) variiert wird.

6. Apparat (1) zur optischen Messung der Topografic einer Probe (2), umfassend eine Beleuchtungseinrichtung (3) zum Beleuchten einer zu messenden Probe, eine Optik (5) mit limitierter Schärfentiefe zum Auffangen von Darstellungen der Probe in Form des von der Probe abgestrahlten Lichts, einen an die Optik angeschlossenen Bildsensor (7) zum Aufnehmen von Bildern der von der Optik (5) aufgefangenen Darstellungen der Probe, eine Fokuspunkt-Verlagerungseinrichtung (10) zur kontinuierlichen Verlagerung des Fokuspunkts (F) der Optik (5) in Relation zur Probe (2) zwischen einzelnen Bildaufnahmen und eine Auswerteeinheit (9) zum Auswerten der vom Bildsensor aufgenommenen Bilder durch Kombinieren der Bilder zu einem 3D Modell der Probe, wobei Brennweitenverstellmittel (12) vorgesehen sind, wobei der Bildsensor (7) dazu ausgebildet ist, Bilder während des kontinuierlichen Verlagerungsrrorgangs aufzunehmen und wobei eine Messsteuerung (11) vorgesehen ist, die die momentane Position (POS) des Fokuspunkts (F) in Relation zur Probe erfasst und an definierten Positionen (P1, P2) ein Triggersignal (TR) an den Bildsensor (7) sendet, das das Aufnehmen eines Bildes auslöst, **dadurch gekennzeichnet, dass** eine Beleuchtungssteuerung (15) die Beleuchtungs-Intensität der Beleuchtungseinrichtung (3) variiert.

7. Apparat nach Anspruch 6, **dadurch gekennzeichnet, dass** die Optik (5) zumindest eine Flüssiglinse (14) mit steuerbarer Brennweite (f) aufweist, die von den Brennweitenverstellmitteln (12) angesteuert wird.

8. Apparat nach Anspruch 6 oder 7, **gekennzeichnet durch** die Beleuchtungssteuerung (15), die die Beleuchtungseinrichtung (3) während des Verlagerungsvorgangs des Fokuspunkts in Relation zur Probe intermittierend zu- und wegschaltet, wobei vorzugsweise die Beleuchiungssteuerung in Korrelation zum Triggersignal (TR) der Messsteuerung (11) die Beleuchtung einschaltet und nach der Bildaufnahme wieder abschaltet.

9. Apparat nach Anspruch 8, **dadurch gekennzeichnet, dass** die Beleuchtungseinrichtung (3) LED-Leuchtmittel (13) umfasst.

10. Apparat nach einem der Ansprüche 6 bis 9, **dadurch gekennzeichnet, dass** die Beleuchtungssteuerung (15) die Beleuchtungs-Position der Beleuchtungseinrichtung (3) variiert.

## Claims

1. A method for the optical measurement of the topography of a sample, comprising illuminating a sample (2) to be measured, collecting representations of the samples in the form of the light (6) emitted from the sample using an optical unit (5) having limited depth of focus, repeated recording of images of the representations of the sample collected by the optical unit in an image sensor (7), wherein between the recording of the images the focal point (F) of the optical unit (5) is continuously shifted in relation to the sample (2) by altering the focal width (f) of the optical unit (5), and evaluating the images recorded by the image sensor by combination of the images into a 3D-model of the sample, wherein the image sensor (7) records images during the shifting process at defined positions (P1, P2) of the focal point in relation to the sample,
**characterized in that** the illumination intensity is varied.

2. A method according to claim 1, **characterized in that** the optical unit (5) has at least one liquid lens (14) having a controllable focal width (f).

3. A method according to claim 1 or 2, **characterized in that** the sample (2) is illuminated intermittently during the shifting process of the focal point (F) in relation to the sample, wherein the sample (2) is preferably essentially illuminated only then when the image sensor records an image.

4. A method according to claim 3, **characterized in that** the sample (2) is illuminated by means of LED illuminants (13).

5. A method according to any of the preceding claims, **characterized in that** the illumination position is varied in relation to the sample (2).

6. A device (1) for the optical measurement of the topography of a sample (2), comprising an illumination device (3) for illuminating a sample to be measured, an optical unit (5) having limited depth of focus for collecting representations of the sample in the form of the light emitted from the sample, an image sensor (7) connected to the optical unit for recording images of the representations of the sample collected by the optical unit (5), a focal point shifting device (10) for continuously shifting the focal point (F) of the optical unit (5) in relation to the sample (2) between individual image recordings and an evaluation unit (9) for evaluating the images recorded by the image sensor by combination of the images into a 3D-model of the sample, wherein there are provided focal width adjustment means (12), wherein the image sensor (7) is adapted to record images during the continuous shifting process and wherein there is provided one measurement control (11), which acquires the actual position (POS) of the focal point (F) in relation to the sample and sends a trigger signal (TR) to the image sensor (7) at defined positions (P1, P2), triggering the recording of an image, **characterized in that** an illumination control (15) varies the illumination intensity of the illumination device (3).

7. A device according to claim 6, **characterized in that** the optical unit (5) has at least one liquid lens (14) having a controllable focal width (f), which is controlled by the focal width adjustment means (12).

8. A device according to claim 6 or 7, **characterized by** the illumination device (15), which switches the illumination device (3) on and off during the shifting process of the focal point in relation to the sample in an intermittent way, wherein the illumination control preferably switches the illumination on in correlation to the trigger signal (TR) of the measurement control (11) and switches it off again after the image recording.

9. A device according to claim 8, **characterized in that** the illumination device (3) comprises LED illuminants (13).

10. A device according to any of claims 6 to 9, **characterized in that** the illumination control (15) varies the illumination position of the illumination device (3).

## Revendications

1. Procédé de mesure optique de la topographie d'un échantillon, consistant à éclairer un échantillon (2) à mesurer, à capter des représentations de l'échantillon sous forme de lumière (6) réfléchie par l'échantillon au moyen d'une optique (5) à profondeur de champ limitée, à prendre de manière répétée des images des représentations de l'échantillon captées par l'optique dans un capteur d'image (7), le point focal (F) de l'optique (5) étant déplacé continuellement par rapport à l'échantillon (2) à la suite d'une modification de la distance focale (f) de l'optique (5) entre la prise des images, et à évaluer les images prises par le capteur d'image par combinaison des images en un modèle en 3D de l'échantillon, le capteur d'image (7) prenant des images pendant le processus de déplacement en des positions définies (P1, P2) du point focal par rapport à l'échantillon, **caractérisé en ce que** l'intensité d'éclairage est modifiée.

2. Procédé selon la revendication 1, **caractérisé en ce que** l'optique (5) comprend au moins une lentille liquide (14) à distance focale (f) réglable.

3. Procédé selon la revendication 1 ou 2, **caractérisé en ce que** l'échantillon (2) pendant le processus de déplacement du point focal (F) par rapport à l'échantillon est éclairé par intermittence, l'échantillon (2) n'étant alors de préférence essentiellement éclairé que pendant que le capteur d'image prend une image.

4. Procédé selon la revendication 3, **caractérisé en ce que** l'échantillon (2) est éclairé à l'aide de moyens d'éclairage à diodes électroluminescentes (13).

5. Procédé selon l'une quelconque des revendications précédentes, **caractérisé en ce que** la position d'éclairage par rapport à l'échantillon (2) est modifiée.

6. Appareil (1) de mesure optique de la topographie d'un échantillon (2), comprenant un dispositif d'éclairage (3) servant à éclairer un échantillon à mesurer, une optique (5) à profondeur de champ limitée destinée à capter des représentations de l'échantillon sous forme de lumière réfléchie par l'échantillon, un capteur d'image (7) raccordé à l'optique et servant à prendre des images des représentations de l'échantillon captées par l'optique (5), un dispositif de déplacement (10) de point focal permettant le déplacement continuel du point focal (F) de l'optique (5) par rapport à l'échantillon (2) entre différentes prises d'image et une unité d'évaluation (9) servant à évaluer les images prises par le capteur d'image par combinaison des images en un modèle en 3D de l'échantillon, des moyens de réglage (12) de distance focale étant prévus, le capteur d'image (7) étant conçu pour prendre des images pendant le processus de déplacement continuel et une commande de mesure (11) étant prévue, qui détecte la position momentanée (POS) du point focal (F) par rapport à l'échantillon et qui envoie au capteur d'image (7) en des positions définies (P1, P2) un signal de déclenchement (TR) qui déclenche la prise d'une image, **caractérisé en ce qu'**un dispositif d'éclairage (15) modifie l'intensité d'éclairage du dispositif d'éclairage (3).

7. Appareil selon la revendication 6, **caractérisé en ce que** l'optique (5) comprend au moins une lentille liquide (14) à distance focale (f) réglable, qui est commandée par les moyens de réglage (12) de distance focale.

8. Appareil selon la revendication 6 ou 7, **caractérisé par** la commande d'éclairage (15), qui active et désactive par intermittence le dispositif d'éclairage (3) pendant le processus de déplacement du point focal par rapport à l'échantillon, la commande d'éclairage mettant de préférence l'éclairage sous tension et mettant celui-ci hors tension après la prise d'image en corrélation avec le signal de déclenchement (TR) de la commande de mesure (11).

9. Appareil selon la revendication 8, **caractérisé en ce que** le dispositif d'éclairage (3) comprend des moyens d'éclairage à diodes électroluminescentes (13).

10. Appareil selon l'une quelconque des revendications 6 à 9, **caractérisé en ce que** la commande d'éclairage (15) modifie la position d'éclairage du dispositif d'éclairage (3).
